# EUROPEAN PATENT SPECIFICATION

(11) **EP 2 794 257 B1**
(45) Date of publication and mention of the grant of the patent: **25.04.2018**
(21) Application number: 12812702.4
(22) Date of filing: 20.12.2012
(51) Int. Cl.: B32B 3/26, B32B 5/18, E01C 13/04, E01C 13/08

(54) **SURFACE**
OBERFLÄCHE
SURFACE

(30) Priority: 23.12.2011 GB 201122269
(43) Date of publication of application: 29.10.2014
(73) Proprietor: Playsmart UK Limited, Tanworth-in-Arden Solihull, West Midlands B94 5DN (GB)
(72) Inventor: CURTIS, Spencer David, Solihull West Midlands B94 5DN (GB); JOHNSTON, Anthony John, Solihull West Midlands B94 5DN (GB)
(74) Representative: Secerna LLP
(86) International application number: PCT/GB2012/053203
(87) International publication number: WO 2013/093471

(56) References cited:
- EP-A1- 2 154 291
- EP-A2- 0 185 645
- GB-A- 2 000 726
- JP-A- H1 175 531
- US-A- 4 199 639
- US-A- 4 946 719
- US-A- 5 352 158
- US-A1- 2009 305 798
- US-A1- 2010 239 790

## Description

### Technical Field

The present invention relates to apparatus, methods and kits for reducing an impact from a fall and/or increasing the cushioning properties of a surface. Particularly, although not exclusively, the present invention relates to apparatus for reducing impact of a fall onto and/or increasing cushioning of a surface, wherein the apparatus comprises a first upper layer and a second layer, wherein the second layer is resilient and comprises at least one foam element and at least one inset region. Also included in the present invention are methods of installing apparatus of the invention and kits and systems for providing impact-absorbing and/or cushioning surfaces.

### Background to the Invention

Impact absorbing and/or cushioning surfaces are used in a variety of different situations and for a number of different purposes. In respect of industrial and commercial situations, e.g. factories, laboratories and food preparation areas, cushioning floor surfaces are provided to provide anti-fatigue flooring for employees standing for long periods of time. People who stand at their work for more than two or three hours a day can experience significant physical stress and fatigue. Typical symptoms will be lower back pain, swollen or painful feet, loss of mobility in the joints, and stiffness in the neck and shoulders. In some cases, there will be more serious consequences, including varicose veins, arthritis in the knees and hips, heel problems and Achilles tendonitis. In order to combat these health problems, anti-fatigue flooring has been introduced which is resilient. Anti-fatigue flooring of the type described above is typically made from rubber, PVC, plastic or a mixture thereof. It is often supplied in mats for ease of installation.

Impact-absorbing surfaces are also employed as flooring for wet areas in sports centres, as surfaces for indoor gym areas and so forth. In certain countries, e.g. the US, equipment such as gym mats, which are used in the context of indoor recreation, should meet certain impact absorbing standards. Gym mats may be made from a variety of materials including foam, for example EVA foam, PVC and rubber.

Surfaces for sports pitches such as hockey pitches, American football fields, golf and the like are also provided with a degree of cushioning to reduce impact injuries such as stress fractures. A variety of different surfacing systems are available for sports grounds including artificial turf systems and needlepunch surfaces.

In addition to the uses discussed above, impact absorbing surfaces are also used in recreational areas such as parks, areas designed for wheeled sports, e.g. skateboard parks, and playgrounds. There has been an increasing emphasis on improving safety of playgrounds and other outside recreational areas. One aspect of such safety concerns is the surface underneath and surrounding the recreational areas. The nature of the surface can be a major factor in determining the injury-causing potential of a fall. A significant number of injuries which are associated with the use of playgrounds occur every year. A high proportion of these injuries result from falls, primarily to the surface on which the equipment is located.

It is apparent that a fall onto a surface with shock-absorbing properties is less likely to result in serious injury than a fall onto a non-shock absorbing surface. Common surfaces such as soil, grass and tarmac or concrete may be hard and have low shock absorbing qualities and as a result the risk of injury if a user, e.g. a child, falls onto the surface is appreciable. As a result, efforts have been made to provide surfaces which are capable of reducing the impact if a user, particularly a child, falls on to the surface. Reduction of impact can potentially help to reduce the likelihood of injury. Typically, the surfaces now installed in playground and other recreational areas have some shock absorbing properties.

In order to reduce the likelihood of serious injury when using playground and recreational areas, many countries have introduced minimum standards for any surface that is installed in these areas. The current standards for playground surfacing in the UK are BS 7188, BS EN 1176 and BS EN 1177. Together these standards cover tests for; critical fall height, slip resistance, indentation and durability. These standards are in place throughout the European Union. Other countries, for example the United States and Canada, have similar standards.

All playground safety surfacing in the UK has to meet certain regulations which are set out in the above-mentioned standards. The test method used in BS EN 1177 uses the term "critical fall height" which is the distance through which a standard headform could be dropped on to a surface before it experiences a head injury criterion (HIC) value of 1000. It is considered that a HIC value greater than 1000 may result in a life-threatening injury.

Put another way, the critical fall height (CFH) is the greatest, vertical, free fall height, from a clearly intended body support, that a given playground surfacing provides acceptable levels of impact protection from. The surfacing immediately under and surrounding a particular piece of playground equipment should have a critical height value of at least the height of the highest accessible part of the piece of equipment. New playground surfaces are tested using the methods described in BS EN 1177.

There are several different types of impact-absorbing surfacing used in recreational and playground areas. A first type is a so-called "grass mat system" which includes a rubber matting often made from recycled tyre rubber. The rubber matting may have an open aperture e.g. latticed design. The rubber mats are typically located on a grassed surface and grass grows through the holes of the lattice structure, thus providing a natural look to the area within a few weeks. Grass matting systems thus have the advantage of providing a natural look to the area. Furthermore, grass matting systems typically provide a high critical fall height value when installed. However, over time, grass matting may "sink" into the underlying ground if not regularly maintained and the open apertures become filled with soil. Typically, a ground stabilising layer, e.g. a small-holed plastic mesh layer or geotextile layer, is located between the underlying surface and the rubber matting in order to prevent "sinking".

Another type of playground surfacing currently used as solid tiles which do not intentionally permit grass growth.

Another type of playground surfacing currently used is a so-called "wet pour" or "poured-in-place" surfacing. Wet pour surfacing is installed on site and requires groundwork prior to installation to ensure that base surface is suitable. Typically, a stone, concrete or tarmac layer is put down followed by one or more layers of wet-pour surface. The wet pour surfacing material is often made up of two rubber layers; a first layer of a rubber such as SBR (styrene butadiene rubber) granules, which are often recycled truck tyre material. A binder may be used in the SBR layer. An upper layer of rubber e.g. TPV (dynamically vulcanised thermoplastic), TPE (thermoplastic elastomer) and/or EPDM (ethylene propylene diene modified) rubber granules mixed with a binder e.g. a polyurethane binder or resin is then installed on top of the SBR layer. Wet pour surfaces which are installed correctly and are of a suitable depth usually offer good critical fall height values. In addition, wet pour surfaces can be different colours and can incorporate various patterns if desired.

However, wet pour surfaces are often expensive and require ground work, such as installation of drainage holes, which other types of playground surfacing systems do not. It is also not possible to provide a natural look to the area with a wet pour surface, since grass cannot grow through the surface. Wet pour surfaces also have to be tested on site since it is manufactured on site, unlike grass mats which are manufactured off site before being installed on site.

Other playground surfacing systems include "mulch". Mulch is a term used to describe a shredded material. Mulch in general provides a lower cost surface than for example wet pour and is also low maintenance. Mulch can be made from e.g. rubber shreds and is often made from recycled rubber. Mulch made from rubber shreds and when combined with e.g. polyurethane binder is typically referred to as bonded rubber mulch. Bonded rubber mulch may be pigmented to have a variety of colours and therefore can be used to create a natural looking environment.

The term "mulch" may also be used to describe shredded material made from natural materials e.g. engineered wood fibre. Surfaces made up of engineered wood fibre tend to compact over time and often need replacing after two to three years.

In certain circumstances, loose fill material such as bark is used as a surfacing material. Loose fill material such as bark is often referred to as a "loose impact absorbing surface". Loose fill has a tendency to shift, which can cause the critical fall height value of the surface to be uneven across the area in which it is installed. There remains a need for surfacing apparatus which overcomes the disadvantages of the impact-absorbing surfaces currently used in recreational, industrial and commercial environments.

### Summary of the Invention

It is an aim of embodiments of the present invention to at least partly mitigate the above-mentioned problems.

It is an aim of certain embodiments of the present invention to provide a method and apparatus for an improved impact-absorption and/or cushioning surface e.g. for use in industrial and/or commercial situations and/or other non-play/recreational uses, recreational areas and/or playgrounds.

According to a first aspect of the present invention there is provided apparatus for reducing impact of a fall onto and/or increasing cushioning of a surface comprising:
a first upper layer and a second layer, wherein the first layer is resilient and comprises at least one hole; and further wherein the second layer is resilient and comprises a plurality of foam elements, wherein at least one foam element is a closed-cell foam element; and at least one inset region, wherein the at least one inset region comprises a plurality of through holes in the second layer, and further wherein the hole(s) of the second layer are partially or wholly filled with a material which supports plant growth.
As used herein, the terms "first upper layer" and "first layer" are interchangeable and refer to a layer which is positioned uppermost when the apparatus is in situ and being used to provide an impact-absorbing and/or cushioning surface. The first layer of the apparatus may be a continuous unitary layer or may comprise a plurality of discrete components, e.g. mats, sheets or the like, which are located abutting each other and secured together to form the first layer. Typically, the mats, sheets or the like are located such that there are no or minimal "gaps" between adjacent mats or sheets. The first layer may comprise a matrix of components e.g. a matrix of cured rubber components. The components may be held together by a binder. Further details of the first layer are provided below.
As used herein, the terms "second lower layer" and "second layer" are interchangeable and refer to a layer which is positioned beneath the first layer when the apparatus is in situ and being used to provide an impact-absorbing and/or cushioning surface. The second layer is resilient and comprises a plurality of foam elements and at least one energy-dissipating element which is an inset region. Suitable inset regions of the present invention are described herein. The second layer may be composed of a number of separate components e.g. mats, sheets or the like which in use are located such that each element abuts at least one other element so as to form a substantially continuous layer. The second layer may alternatively be supplied and located in a surfacing system as a unitary element e.g. a single roll of material.
Aptly, the apparatus is for use to provide an impact-absorbing and/or cushioning surface. The apparatus may be for use to provide a surface in playgrounds and/or other recreational areas. In one aspect, the present invention provides a playground surface comprising apparatus as described herein. In a further aspect, the present invention provides a sport pitch surface comprising apparatus as described herein.
Embodiments of the present invention relate to apparatus and use of such apparatus to provide surfaces which are capable of dissipating energy generated by a person falling onto the surface, thus reducing the impact of the fall and reducing the likelihood of injury resulting from the fall.

Embodiments of the present invention relate to apparatus and methods of use of such apparatus to provide surfaces which are capable of dissipating energy generated by a person walking, running, jumping or other repetitive movement on the surface, thus reducing the impact of the activity and reducing the likelihood of injury resulting from the repetitive movement.

The second layer comprises a plurality of foam elements. At least one foam element is a closed cell foam element. In one embodiment, the foam elements are compressed foam elements. Further details of the foam elements are provided below.

In one embodiment, the apparatus may comprise one or more layers of ground stabilising material. In one embodiment, the ground stabilising material is a geotextile material.

Aptly, the at least one inset region comprises a plurality of through holes in the second layer. One or more of the hole(s) may extend only partially through the second layer. In one embodiment, the at least inset region comprises one or more grooves or channels on a surface of the second layer.

In one embodiment, the first layer is also resilient. The first layer may be selected from a variety of materials described herein for example a rubber material, e.g. a rubber matting; an artificial turf material; bonded rubber shreds, engineered wood fibre, a wet pour surface, floor tiles and a woven or non-woven carpet material. Further details of the first layer are provided herein below.

Aptly, the apparatus comprises an intermediate layer situated between the first layer and the second layer. Aptly, the intermediate layer comprises one or more of soil, turf, loam and/ or sand. Aptly, the first layer comprises at least one securing element.

In a further aspect of the present invention, there is provided a kit for providing an impact absorbing and/or cushioning surface according to claim 12.

Aptly, the second component comprises a first layer as described herein. Aptly, the first component comprises a second layer as described herein. Aptly, the kit comprises a plurality of first components and a plurality of second components. In one embodiment, the kit further comprises a securing elements for securing an edge of a second component to a corresponding edge of a further second component so as to provide a substantially continuous planar surface.

In a further aspect of the present invention, there is provided a method of installing an impact absorbing surface comprising:
a. locating a first component comprising a second layer as described herein;
b. locating a second component which comprises the first layer as described herein on top of the first component; and
c. repeating steps (a) and (b) until an impact absorbing surface of a desired area is installed.

### Brief Description of Drawings

Embodiments of the present invention will now be described hereinafter, by way of example only, with reference to the accompanying drawings in which:
Figure 1 illustrates a cross-sectional representation of an embodiment of the apparatus of the present invention which includes a rubber matting layer;
Figure 2 illustrates a cross-sectional representation of an embodiment of the apparatus of the present invention which includes an additional layer of soil or turf;
Figure 3 illustrates a cross-sectional representation of an apparatus described herein;
Figure 4 illustrates a cross-sectional representation of an apparatus described herein; and
Figure 5 illustrates a cross-sectional representation of an apparatus described herein

### Description of Embodiments

In the drawings like reference numerals refer to like parts.

The present invention includes apparatus for reducing impact of a fall onto and/or increasing cushioning of a surface according to claim 1. The apparatus of the present invention may be used in a surfacing system where impact attenuation is desired. The surfacing system may be for outdoor or indoor use, and may be for recreational or non-recreational use.

In one embodiment, the foam elements are compressed foam elements. Aptly, the foam elements are closed cell cross-linked polyethylene foam element. Alternatively, the foam elements may be a mixture of differing foam types e.g. a mixture of closed-cell foam elements and open-cell foam elements.

It is known in the prior art to use a layer of foam in playground surfaces, other recreational areas and non-recreational areas. However, the prior art surfaces do not include a foam layer which incorporates inset regions as described herein. Inset regions are considered to increase the critical fall height value of a foam layer which incorporates such inset regions, thus providing apparatus which has improved impact-absorbing qualities. This may result in a reduction in severity of injuries resulting from impact on a surface which includes the apparatus of the invention.

Aptly, each foam element may be for example a polyethylene foam element, a polypropylene foam element, a polyurethane foam element or a polystyrene foam element.

Aptly, at least one foam element is a recycled foam element. The foam may be recycled from a variety of different materials and may be industrial or post-industrial waste. As a result, the foam elements making up a second layer may differ from other foam elements in the second layer by size; density; shape; and/or composition.

In an alternative embodiment, at least one foam element is a non-recycled foam element. The second resilient layer may be in the form of a pad or sheet or a plurality of pads or sheets, each of which are composed of a plurality of foam elements. Alternatively, the second resilient layer may be a continuous unitary layer which comprises a plurality of foam elements. The continuous layer may be supplied in the form of a roll which is then unrolled to form the second layer of the apparatus.

Material which may be suitable as a second resilient layer includes a cross-linked polyethylene (XLPE) foam. In one embodiment, the second layer is a pad formed of foam "flakes" or elements, of different densities. Aptly, each foam element in the second resilient layer is thermally bonded to at least one other foam element in the second resilient layer. Typically, the foam flakes are closed-cell, cross-linked polyethylene foam flakes which are thermally bonded together to form a resilient foam pad. The resilience of the foam pad may be altered by altering the composition of the foam flakes and/or by altering the thickness of the foam pad. Manufacturers of foam of this type, which does not include inset regions as described herein, include for example 3R Foam Manufacturing, and also Schmitz Foam Products B.V. which supplies foam using the marks, ProPlay and ProPlay Sport.

In one embodiment, the second layer comprises a 100% closed-celled cross-linked thermal combined PE foam pad which is composed of recycled foam flakes which comprises one or more inset regions.

The apparatus comprises a foam layer, wherein the foam layer is provided with at least one energy-dissipating element which is an inset region. The present inventors have determined that the provision of inset regions, for example through holes, in the foam layer, results in a surprising improvement in the impact-attenuating and/or cushioning properties of the foam layer. Thus, embodiments of the present invention provide apparatus which have improved impact absorbing and/or attenuating properties. Embodiments of the present invention therefore have utility in the provision of safety surfaces e.g. playground and recreational area surfaces as well sport pitch surfaces, pathways, industrial workplace flooring, indoor gym surfaces and domestic garden surfaces.

The second layer comprises a plurality of through holes. In one embodiment, the plurality of through holes forms an array of holes. An embodiment which includes a plurality of through holes may provide the advantage that grass and other plants are able to grow through the through holes and then also through the first layer to provide a natural looking surface.

The hole(s) may be substantially vertical through a cross section of the second layer. Alternatively, the hole(s) may be diagonal, substantially horizontal, helical and/or multi-axial through a cross section of the second layer. In one embodiment, the hole(s) are non-linear. In one embodiment, the hole(s) may have a single entry point, e.g. on an upper surface of the second layer, which splits to form multiple exit points e.g. positioned on a lower surface of the second layer. Alternatively, the hole(s) may have multiple entry points e.g. on an upper surface of the second layer which converge to form a single exit point, e.g. on the lower surface of the second layer. The "exit point" need not necessarily be on a lower surface of the second layer in the embodiment in which the hole(s) are not through hole(s).

Aptly, the hole(s) has a diameter of approximately 20mm. Aptly, the hole(s) has a diameter less than about 20mm e.g. 5mm, 10mm or 15mm. Aptly, the hole(s) has a diameter of 20mm or greater e.g. 25mm, 30mm, 35mm, 40mm or 45mm.

The holes may be spaced apart from each other e.g. the holes may be 10mm,15mm, 20mm, 25mm, 30mm, 35mm, 40mm, 45mm, or 50mm or greater in distance from one another within the second layer.

In one embodiment, the hole(s) have a non-uniform diameter along its length. For example the hole(s) may be flared. The second layer may comprise a plurality of inset regions, e.g. holes, which have differing shapes as described above. The inset region(s) e.g. hole(s) may be circular for example or any other suitable shape e.g. square, hexagonal, rectangular, octagonal and/or triangular.

In one embodiment, the second layer comprises a plurality of foam elements and a plurality of through holes, which are substantially vertical, wherein the plurality of foam elements has a thickness of approximately 35 mm and the through holes have a diameter of approximately 20mm.

The inset regions can be incorporated in the second layer by known methods either during manufacture of the second layer or subsequent to the manufacture of the second layer i.e. post-production modification.

For example, the inset regions may be introduced into the second layer by punching the inset regions through the at least one foam element. The inset regions may be introduced between foam elements in the second layer. In one embodiment, the inset regions are cut and/or stamped into the second layer. In one embodiment, the inset regions are moulded into the second layer.

The inset regions are partially or wholly filled with a material which supports plant growth e.g. grass plant growth. The material may be selected from soil, sand, loam and combinations thereof. Aptly, the material further comprises grass seed.

The inventors have discovered that the provision of a second layer which comprises at least one inset region provides a notable improvement in the impact-absorbing qualities of a surface which includes such a layer. This notable effect may result in apparatus which have improved impact-absorbing qualities. Alternatively or in addition, apparatus which include such a layer may comprise a layer which has a reduced thickness relative to an apparatus which includes a layer without an inset region whilst maintaining a similar level of impact-absorbing properties. This has the advantage of requiring fewer materials and therefore may reduce the cost of the apparatus.

In one embodiment, the apparatus may comprise more than one second layer wherein each second layer is located beneath the first layer in situ. Thus, in one embodiment, the apparatus comprises two, three, four or more second resilient layers. The second layers may differ from each other in e.g. thickness and type and number of inset regions.

In one embodiment, each foam element in the second resilient layer is welded to at least one other foam element in the second resilient layer. Alternatively or in addition, each foam element in the second resilient layer may be adhered to at least one other foam element in the second resilient layer.

In one embodiment, the foam element is a foam pad which comprises a uniform density and thickness. In one embodiment, the second layer comprises at least one foam element wherein the foam element has a non-homogenous structure.

Aptly, the second layer has a thickness of approximately 10mm, 15mm or greater, e.g. 20mm, 25mm, 30mm, 35mm, 45mm, 55mm, 65mm, 75mm, 85mm, 90mm or 95mm or greater. In one embodiment, the second layer has a thickness of approximately 40mm. Aptly, the second layer has a thickness of approximately 35mm. The thickness of the second layer may be dependent on the intended use of the apparatus. For example, if the apparatus is for use as a surface for a sports pitch, e.g. a field hockey or baseball pitch, the level of resilience required may be less than that required for a playground surface. Therefore, the thickness of the second layer may be reduced e.g. may be 10mm or 15mm. If the surface is for a playground or other area in a high value for critical fall height is important, the second layer may be thicker e.g. 25mm or greater.

In one embodiment, the second layer is supplied in the form of a roll of material. The sheet may be subsequently cut to fit the area in which the apparatus is to be situated. In one embodiment, the second layer is in the form of pre-cut sheets or pads. The sheets may be substantially rectangular and/or alternatively may be shaped so as to have interlocking elements. Aptly, the interlocking elements allow abutting sheets of the second layer to be adjoined.

The size of the sheet or roll is not essential to the invention. In one embodiment, the second layer is supplied as a sheet approximately 0.9m x 2.25m. In one embodiment, the second layer is supplied as a sheet approximately 0.8m x 1.2m. The second layer of the apparatus may comprise a plurality of sheets which are laid such that an edge of one sheet abuts the edge of a neighbouring sheet.

Aptly, the second layer further comprises a layer of ground stabilising material. In one embodiment, the ground stabilising material is a layer of geotextile material. Aptly, the layer of ground stabilising material, e.g. geotextile material, is positioned on a downwardly facing surface of the second layer in use. The ground stabilising material may help a foam pad to maintain its shape and form. In one embodiment, the ground stabilising material is positioned on an upwardly facing surface of the second layer in use. Aptly, the second layer further comprises two layers of ground stabilising material, a first layer being positioned on a downwardly facing surface of the second layer and a second layer being positioned on an upwardly facing surface of the second layer in use.

In one embodiment, the ground stabilising material is a non-woven geotextile material. In embodiment, the geotextile material comprises polypropylene continuous fibres.

Aptly, the nature of the first layer will depend on what type of surface is required. For example, aptly a surface for a sports pitch may include apparatus which comprises an artificial turf system, whilst a surface for a playground may comprise a wet-pour surface or a rubber matting layer as a first upper surface. Thus, embodiments of the present invention provide apparatus which provides an impact-absorbing and/or cushioning effect to a wide variety of surfaces and therefore a variety of different applications.

The second layer described herein can be used with a variety of different first layers. The nature of the first layer may depend on the type of surface to be installed. For example, playground surfaces will typically have to meet certain standards for slip resistance and critical fall heights. This may not be the case for sports pitches, for example, which will typically require a lower resilience and therefore a different first layer may be used. The desired look of the end surface may also effect the decision as to which first layer the apparatus will comprise. For example, wet-pour surfaces have the quality of being available in different colours. In addition, wet-pour surfaces may be installed such that different patterns are incorporated into the first layer.

The thickness of the first layer will depend on its nature and the intended use of the apparatus. The thickness of the first layer may range from e.g. 10mm e.g. in the context of artificial turf system to 150mm or greater e.g. in the context of wet pour surfaces to 200mm or greater in the context of shredded material. Thus in one embodiment, the first layer comprises a thickness of between about 10mm to 150mm, e.g. 10mm, 15mm, 20mm, 25mm, 30mm, 35mm, 40mm, 45mm, 50mm, 55mm, 60mm, 65mm, 70mm, 75mm, 80mm, 85mm, 90mm, 95mm, 100mm, 105mm, 110mm, 115mm, 120mm, 125mm, 125mm, 130mm, 135mm, 140mm, 145mm or 150mm. In one embodiment, the first layer may comprise a thickness which is greater than 50mm e.g. 55mm, 60mm, 65mm, 70mm or greater.

The first layer is resilient. In one embodiment, the first layer comprises a rubber material. The first layer comprises at least one hole. In one embodiment, the first resilient layer comprises a rubber matting. In one embodiment, the first layer may be considered to have an open-celled structure. In one embodiment, the rubber mattering is latticed. In one embodiment, the rubber matting comprises one or more hole(s) which is circular, square, hexagonal, triangular, octagonal and/ or rectangular.

Such rubber matting may be described as "grass matting". Grass matting is used in many situations to provide an impact-absorbing surface e.g. playground surfaces and recreational area surfaces. Grass matting has the advantage of allowing grass to grow through the holes in the matting, thus providing a natural-looking, impact-absorbing surface. In addition, rubber grass matting is typically hard-wearing and long-lasting.

Aptly, at least one hole of the first layer and at least one hole of the second layer are substantially generally aligned to form at least one continuous through hole.

There are a number of different grass matting systems which may be suitable as a first layer for use in the present invention. Grass mats which are suitable for use in the present invention may be of any suitable size. In one embodiment, the mat(s) are approximately 1.5 x 1m in size. The depth and design of the mat may vary, which will have an effect on the resilience of the first layer and therefore may affect the Critical Fall Height value of a system which includes the matting. The thickness of the first layer may range from e.g. 10mm to 50mm. Thus in one embodiment, the first layer comprises a thickness of between about 10mm to 50mm, e.g. 10mm, 15mm, 20mm, 25mm, 30mm, 35mm, 40mm, 45mm or 50mm. In one embodiment, the first layer may comprise a thickness which is greater than 50mm e.g. 55mm, 60mm, 65mm, 70mm or greater.

In one embodiment, the first layer is non-unitary i.e. composed of a plurality of elements e.g. mats or sheet. Aptly, the first layer is a mat or sheet which comprises at least one securing element. The securing element is for securing adjacent mats or sheets together to prevent unauthorised removal of the mats and to ensure a substantially smooth surface.

In one embodiment, the first layer comprises a plurality of mats, each mat being connected to an adjacent mat by a suitable securing element. In one embodiment, the securing element is a plastic fastener e.g. a plastic tie for example a cable tie, which loops through open cells of adjoining mats. Cable ties and other plastic fasteners have the advantage of ensuring that the mats are harder to vandalise and remove from the site.

Other securing features include mats which have edges which are capable of interlocking with the edges of adjacent mats, thus securing one mat to its neighbours. The apparatus may also comprise securing means for locking the first layer to the second layer. Thus, in one embodiment, the first layer comprises a grass mat which comprises an interlocking element e.g. an interlocking edge. In one embodiment, the apparatus comprises at least one securing element which is in the form of a peg.

In one embodiment, each mat may comprise one or more male securing elements and one or more complementary female securing elements. The male securing elements and female securing elements are positioned such that in use a male element of one mat mates with the female securing element of an adjacent and abutting mat so as to secure the two mats together.

In an alternative embodiment, the mats or sheets are provided with female securing elements only and the male securing elements are provided separately and inserted once edges of adjoining mats have been aligned.

The at least one male securing element may be for example a substantially vertical bolt or rivet. Aptly, the male element is a screw. Aptly, the male element is threaded. Aptly, the male element is formed from metal, rubber, plastic or a combination of these e.g. rubber covered metal.

Aptly, the female securing element is a nut or threaded insert. Aptly, the insert is integral to an edge of a mat. The male and/or female securing elements may be moulded into an edge of the mat, pressed into the edge of a mat and/or welded into the edge of a mat. Aptly, the securing elements are positioned such that their top surface is lower than the top surface of the first layer during use. This is to avoid injury resulting in a fall onto a portion of the mat in which the securing element is positioned.

Vandalism of playground and recreational surfaces is a currently recognised problem. Mats which are secured using some integral interlocking features can be easily pulled apart and the mats removed from the apparatus. An advantage of the securing elements described above is that it is more difficult to unsecure adjoining mats and so makes it more difficult to vandalise the apparatus.

In one embodiment, the at least one securing element is a plastic fastener e.g. a non threaded plastic fastener e.g. a cable tie or rivet fastener.

As noted in the background to the invention, some current systems aim to overcome sinking by using a mesh and/or a geotextile layer underneath the rubber matting. The mesh or geotextile have minimal impact-absorbing properties. In contrast, embodiments of the present invention which comprises rubber matting and a layer comprising at least one foam element as described herein have both improved impact-absorption properties and also prevent sinking. Without being bound by theory, it is believed that the inset regions of the second resilient layer as described herein help to dissipate energy resulting from an impact, e.g. a child falling from a height, or the impact of a person running, on the surface, thus reducing the likelihood of resulting injury.

In one embodiment, the apparatus does not comprise a layer of small holed plastic mesh located between the first layer and the second layer. Thus, in one embodiment, fewer components are required, so reducing material cost.
Aptly, the first layer comprises a polymeric material. In one embodiment, the first layer comprises a polymeric material selected from polypropylene, polyethylene, polystyrene, polyurethane, polyvinyl chloride, a biopolymer and a thermoplastic elastomer.

Aptly, the first layer comprises a foam layer. The foam layer may comprise for example EVA foam. In one embodiment, the first layer is in the form of a roll of material. Alternatively, the first layer is in the form of one or more tiles or mats.

In one embodiment, the first layer comprises a plurality of projections on a surface thereof, wherein in use the plurality of projections project downwardly. Aptly, an upper surface of the second layer directly abuts the projections of the first layer.

Aptly, the first layer and/or the second layer is fire-retardant. In this respect, the first and/or second layer may comprise a fire-retardant agent. In one embodiment, the first layer comprises rubber matting e.g. rubber matting supplied by PlaySmart UK under the mark, FireSmart.

In one embodiment, the first layer is a matting which comprises a PVC/rubber blend. One aspect of the PVC content is that it confers fire retardant properties to the matting.

Aptly, the apparatus comprises an intermediate layer located between the first layer and the second layer. The intermediate layer may comprise one or more of soil, turf, loam and/ or sand. The intermediate layer may support the growth of plant material e.g. grass.

Aptly, the second layer provides a base support on a ground surface.

In one embodiment, the apparatus further comprises a third layer. Aptly, the third layer is located beneath the second resilient layer. Aptly, the third layer comprises stones, sand and/or aggregate. In one embodiment, the third layer is a tarmac or concrete.

In a further aspect of the invention, there is provided a kit for providing an impact absorbing surface according to claim 12.

Aptly, the second component comprises a first layer as described herein. Aptly, the first component comprises a layer as described herein. Aptly, the kit comprises a plurality of first components and a plurality of second components. The kit may further comprise one or more securing elements for securing an edge of a second component to a corresponding edge of a further second component so as to provide a continuous substantially planar surface.

Aptly, the securing elements comprise plastic securing elements e.g. cable ties. In one embodiment, the first component and the second component are each substantially rectangular or square.

Aptly, the first component comprises a layer as described herein as "first layer". Aptly, the second component comprises a layer as described herein as "second layer". In an embodiment, the first component and/or the second component is selected from a mat, a pad and a sheet.

A further aspect of the present invention provides a method of installing an impact absorbing surface according to claim 14.

Aptly, the first component comprises a layer described herein as a "second layer". Aptly, the second component of step (b) comprises a layer as described herein as a "first layer".

Aptly, the second component comprises at least one mat, pad and/or sheet. Aptly, the method comprises securing adjacent mats, pads and/or sheets to each other.

In one embodiment, the method further comprises, following step (a) and before step (b) locating a layer of soil, turf, sand or loam or a combination thereof on top of the first component.

The method may further comprise, when the first component comprises a layer which comprises at least one hole, partially or wholly filling the hole with a material which supports plant growth.

The method may further comprise carrying out a test to determine the suitability of the installed surface for its intended purpose. The method may further comprise carrying out a drop test or a swing test. The method may further comprise a step of testing the critical height of the surface. The method may further comprise (a) dropping an instrumented metal headform onto a portion of the surface and (b) recording the acceleration - time pulse during acceleration.

The method may further comprise carrying out the test methods described in standard BS EN 1177 (UK), EN 1177 (EU), ASTM F 1292-99 (US), CA-CSA Z614-07 (Canada) or in equivalent standards of other countries.

The apparatus can be installed using known methods for installing impact-absorbing surfaces. The method of installation will depend at least in part on the nature of the first layer comprised in the apparatus.

The second layer may be supplied in the form of cut sheets or pads. Alternatively, the second layer may be supplied in the form of a roll of material.

The second layer, whether in the form of sheets or pads or a roll of material, may be located across the whole area in which the surface is to be installed prior to the installation of further layers above the second layer. Alternatively, the first and second layers are installed in a piecemeal fashion with each row of the second layer being covered by a corresponding row or covering of the first layer before a further row of the second layer is laid.

The method of installation may comprise first carrying out a site survey. A site survey may check required depths of surface for example. The method may further comprise preparing the ground which underlies the apparatus to be installed to remove local undulations. The method may comprise locating a layer of stones, concrete, gravel or the like. The method may comprise locating a layer of plant-supporting material, e.g. soil, loam and/or turf on top of the prepared ground or layer of stones etc. The second layer may then be installed either on top of the layers of stones, plant supporting material or directly on the prepared ground. When the second layer is in the form of pads or sheets, the method may comprise interlocking adjacent pads or sheets.

The method may further comprise located a further second layer as described herein on top of the already installed second layer and repeating the interlocking step if required. This step may be repeated a plurality of times to install multiple layers of the foam second layer.

The method may comprise a step of installing the first layer on top of the installed second layer. The first layer may comprise grass mats as described herein. The method may comprise locating the grass mats on top of the uppermost second layer and then securing adjacent grass mats together e.g. using the securing elements described herein.

The method may further comprise locating a layer of plant-supporting material e.g. a soil, loam and/or turf on top of the uppermost second layer prior to locating the first layer on top of the plant supporting material layer.

The method may further comprise installing a base layer which comprises e.g. stones, tarmac and/or concrete. The method may further comprise a step of installing an edging around the perimeter of the site on which the apparatus is to be installed. The method may further comprise a step of locating the second layer either on top of the layers of stones, plant supporting material or directly on the prepared ground. When the second layer is in the form of pads or sheets, the method may comprise a step of interlocking adjacent pads or sheets.

The method may further comprise located a further second layer as described herein on top of the already installed second layer and repeating the interlocking step if required. This step may be repeated a plurality of times to install multiple layers of the foam second layer.

Aptly, the method further comprises locating the first layer on top of the uppermost second layer.

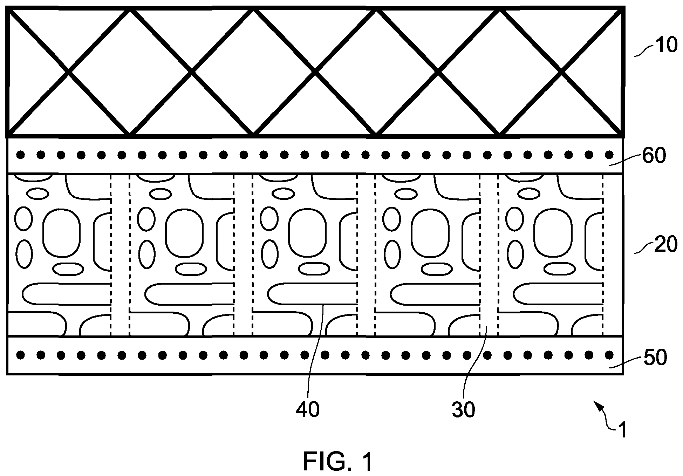

Embodiments of the present invention are described below with reference to the accompanying drawings:
The present invention includes an apparatus 1 which includes a first layer and a second layer. The first layer is located above the second layer. In one embodiment, the first layer is a rubber grass mat 10 as shown in Figure 1. The second layer is a foam pad 20 which comprises a number of through holes 30. The foam pad may be composed of a plurality of foam elements e.g. foam flakes 40.

The apparatus may also include one or more layers of ground stabilising material e.g. geotextile material. Figure 1 shows a lower layer of geotextile material 50 which is positioned beneath the foam pad and a layer of geotextile material 60 which is located between the foam pad and the rubber grass mat. The geotextile material layers may be bonded to the foam pad or may be separate to the foam pad.

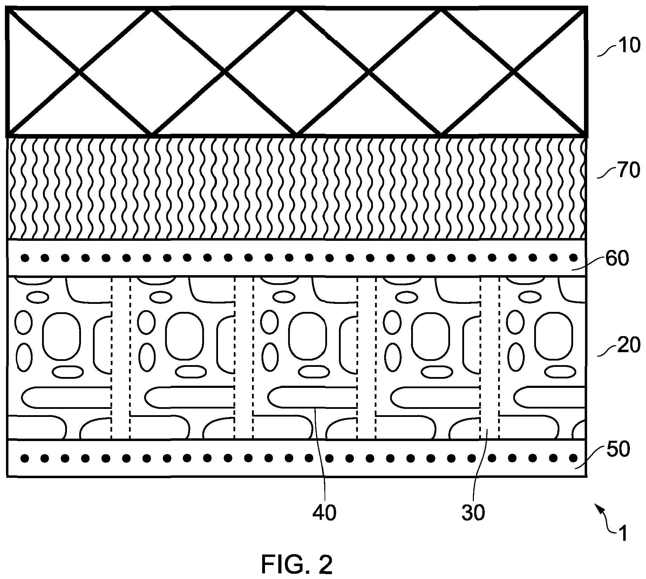

Figure 2 illustrates a further embodiment of the apparatus of the invention. The apparatus includes an additional layer of grass 70 located between the upper geotextile layer 60 and the rubber grass mat 10.

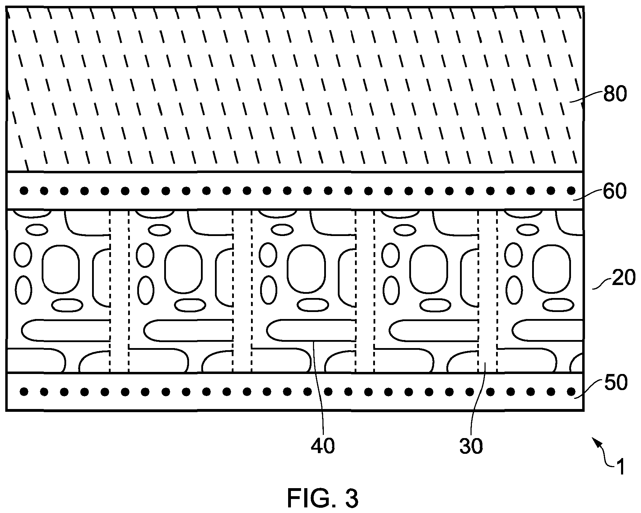

Figure 3 illustrates an apparatus in which the first upper layer is a layer of bonded rubber mulch 80.

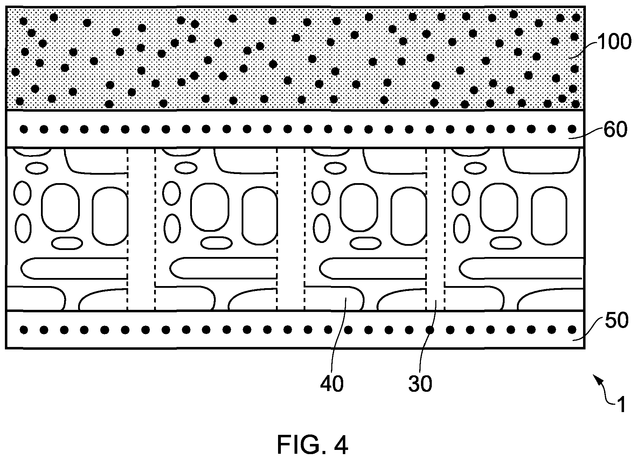

Figure 4 illustrates an apparatus in which the first upper layer is a layer of EPDM, TPV or TPE 100.

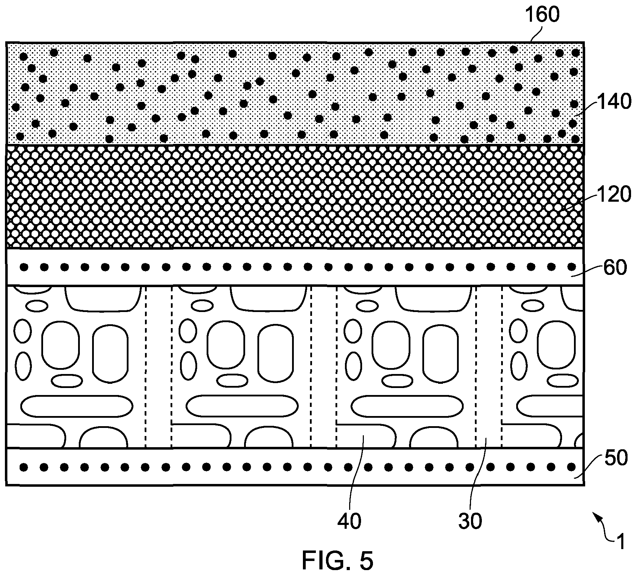

Figure 5 illustrates an apparatus in which the first upper layer comprises a layer of SBR 120 which directly abuts the upper geotextile layer of the second layer. The first layer also includes a layer of EPDM, TPV or TPE 140 which is located above the layer of SBR and provides an upwardly facing surface 160 of the apparatus.

### Examples

### TESTING OF PRIOR ART SURFACE

In one embodiment, the apparatus is for use as a surface in a playground area. Surfaces for use in playground areas are tested to determine their impact absorption values. The impact absorption tests in both the US and European standards are drop tests which simulate the falling of a child's head from various heights of play equipment. A rebound value referred to a HIC value is measured at each height - if the HIC value is less than 1,000, the surface is seen said to have passed at the test height and can be marketed as being suitable for a Critical Fall Height (CFH) of that height. Typically, the surface will be tested at various heights until you reach a height where the HIC exceeds 1,000 and then the manufacturer would claim the highest height at which a pass was obtained.

Test results using a first layer comprising a latticed rubber matting which is supplied by PlaySmart UK under the mark, EcoSmart and FireSmart are as follows:
- Grass mat plus plastic mesh over a concrete base = 0.9m CFH
- Grass mat plus plastic mesh over turf & 100mm of soil over tarmac = 3.0m CFH

Testing was undertaken to determine the Critical Fall Height of an EcoSmart or FireSmart mat as manufactured and installed by PlaySmart UK, intended for use as a playground safety surface.

A boxed sample comprising a 1 m x 1.5m rubber mat and as shown below was tested for Critical Fall Height.

| |
|---|
| **Grass Mat - 23mm** |
| **Support Mesh** |
| **Turf** |
| **100mm Top Soil** |
| **Tarmac Base** |

The above construction allows grass to grow through the support mesh and rubber mat sample.

Testing was undertaken in accordance with the following standards:
**Critical Fall Height** in accordance with the requirements of BS EN 1177:1998 *'Impact Absorbing Playground Safety Surfaces'*.

A test method adopted for Artificial Sports Surfaces in BS 7044 was also carried out.

### EXPERIMENTAL DETAILS

### Critical Fall Height - BS EN 1177:1998 [Accredited]

Critical Fall Height is determined by a series of impacts being conducted in accordance with the requirements of the Head Injury Criterion (HIC) method.

A free falling hemispherical headform with a mass of 4.60kg and a diameter of 160mm is used to carry out the test. Mounted in the centre of gravity of the headform is a tri-axial accelerometer, which measures the total resultant deceleration and time duration of the complete impact. The signal is fed via a charge amplifier, with a lower limiting frequency of 0.1Hz, to a microcomputer for processing of the HIC value.

From a range of increasing drop heights, HIC values are obtained and a graph of HIC against drop height plotted, and from this graph the height equivalent to a HIC value of 1000 calculated for the prepared sample.

### PERFORMANCE REQUIREMENTS

### Critical Fall Height [BS EN 1177]

Critical Fall Height (CFH) is determined as the lowest value obtained for the effective drop height producing HIC = 1000, in any of the four series of tests as undertaken on the sample.

### TEST RESULTS

### Critical Fall Height

Critical Fall Height testing was conducted on a day on which the prevailing weather conditions recorded as dry, warm and sunny, the ambient temperature recorded at 25°C, while the temperature of the turf/soil was recorded at 23°C.

All equipment used was calibrated to the accuracy required in the appropriate standard.

| | Range of individual determinations (m) | | | | Lowest Height |
|---|---|---|---|---|---|
| **Grass Mat [23mm]** | 3.58 | 3.61 | 3.63 | 3.64 | **3.58m** |

**NB:** The maximum HIC value for an acceptable level of injury prevention is taken to be 1000. The resultant Critical Fall Height for the sample is determined as the lowest figure obtained.

### Results

The CFH was determined to be 3.58m. BS EN 1177 requires that CFH is recorded in metres to one decimal place without rounding; accordingly the CFH of the sample is therefore classified as 3.50m.

### Example 2 - Present invention using a through-holed foam pad as a second layer

### EXPERIMENTAL DETAILS

A standard grass mat, as used in Example 1 was used as a first layer. A 35mm holed 100% thermally bonded closed cell cross-linked polyethylene foam pad (XLPE) with 20mm diameter holes was used as a second layer. The foam pad is composed of post-industrial recycled foam "flakes" of different densities. The second layer was located as a ground contacting layer. A 30mm of soil was provided over the holed foam pad. The grass matting was located above the soil layer.

### Critical Fall Height - BS EN 1177:1998 [Accredited]

Critical Fall Height is determined by a series of impacts being conducted in accordance with the requirements of the Head Injury Criterion (HIC) method.

A free falling hemispherical headform with a mass of 4.60kg and a diameter of 160mm is used to carry out the test. Mounted in the centre of gravity of the headform is a tri-axial accelerometer, which measures the total resultant deceleration and time duration of the complete impact. The signal is fed via a charge amplifier, with a lower limiting frequency of 0.1Hz, to a microcomputer for processing of the HIC value.

### Results

| **HIC** | **Feet** | **Angle** |
|---|---|---|
| 144 | 5'7" | 17 |
| 264 | 7'4" | 3 |
| 380 | 8'9" | 22 |
| 424 | 9'2" | 1 |
| 385 | 10'1" | 22 |
| 452 | 10'2" | 12 |
| 505 | 10'4" | 15 |

At the greatest height tried in the tests - 10' 4" (3.2m) - the HIC value (505) was only half the permitted maximum (1000).

The CFH result for the standard 35mm XLPE pad (i.e. without holes) when used in a system with artificial grass is 1.70m.

### Conclusion

The examples show that a system which comprises a holed XLPE pad and a grass matting upper layer as described above has substantially greater impact absorbing qualities as compared to a system which comprises no XLPE pad. Furthermore, the CFH of the tested system i.e. a holed XLPE pad and a grass matting upper surface has a substantially higher CFH value than a system comprising artificial grass and a standard (without holes) XLPE pad of the same thickness.

## Claims

1. Apparatus for reducing impact of a fall onto and/or increasing cushioning of a surface comprising:
a first upper layer and a second layer, wherein the first layer is resilient and comprises at least one hole, and further wherein the second layer is resilient and comprises;
a plurality of foam elements, wherein at least one foam element is a closed-cell foam element; and
at least one inset region, wherein the at least one inset region comprises a plurality of through holes in the second layer and wherein the hole(s) of the second layer are partially or wholly filled with a material which supports plant growth.

2. Apparatus according to claim 1, wherein at least one foam element of the plurality of foam elements is selected from a polyethylene foam element, a polypropylene foam element, a biopolymer element, a EVA foam element, a polyurethane foam element, a polystyrene foam element and combinations thereof.

3. Apparatus according to claim 1 or claim 2, wherein each foam element in the second resilient layer is thermally bonded to at least one other foam element in the second resilient layer.

4. Apparatus according to any preceding claim, wherein the second layer has a thickness of approximately 25mm or greater, e.g. 35mm, 45mm, 55mm, 65mm, 75mm, 85mm, 90mm or 95mm.

5. Apparatus according to any preceding claim, wherein the second layer further comprises a layer of ground stabilising material, wherein said layer of ground stabilising material is positioned on a downwardly or an upwardly facing surface of said second layer in use.

6. Apparatus according to any preceding claim, wherein the hole(s) of the second layer has a diameter of approximately 20mm or greater e.g. 25mm, 30mm, 35mm, 40mm or 45mm.

7. Apparatus according to any preceding claim, wherein the at least one inset region further comprises one or more grooves or channels on a surface of the second layer.

8. Apparatus according to any preceding claim, wherein the material is selected from soil, sand, loam and combinations thereof, and optionally wherein the material further comprises grass seed.

9. Apparatus according to any preceding claim, wherein the first layer comprises a rubber material.

10. Apparatus according to any preceding claim, wherein at least one hole of the first layer and at least one hole of the second layer are substantially generally aligned to form at least one continuous through hole.

11. Apparatus according to any preceding claim, which comprises a third layer which is an intermediate layer located between the first layer and the second layer, wherein the intermediate layer comprises one or more of soil, turf, loam, grass seed and/or sand, and optionally wherein the apparatus comprises a fourth layer which is located beneath the second layer, wherein the fourth layer comprises soil, concrete, aggregate, sand or combinations thereof.

12. A kit for providing an impact absorbing surface comprising a first component which comprises the second layer of any of claims 1 to 11 and a second component which comprises the first layer of any of claims 1 to 11 wherein the second component is for locating adjacent to and above the first component in use.

13. A kit according to claim 12, which further comprises a securing element for securing an edge of a second component to a corresponding edge of a further second component so as to provide a continuous horizontal surface.

14. A method of installing an impact absorbing surface comprising:
a. locating a first component comprising the second layer of any of claims 1 to 11;
b. locating a second component which comprises the first layer of any of claims 1 to 11 on top of said first component; and
c. repeating steps (a) and (b) until an impact absorbing surface of a desired area is installed.

## Patentansprüche

1. Vorrichtung zum Vermindern des Aufpralls bei einem Fall auf und/oder Verstärken der Polsterung einer Fläche, umfassend:
eine erste Deckschicht und eine zweite Schicht, wobei die erste Schicht elastisch ist und mindestens ein Loch umfasst und wobei ferner die zweite Schicht elastisch ist und Folgendes umfasst:
eine Vielzahl von Schaumstoffelementen, wobei mindestens ein Schaumstoffelement ein geschlossenzelliges Schaumstoffelement ist; und
mindestens einen Einsatzbereich, wobei der mindestens eine Einsatzbereich eine Vielzahl von durchgehenden Löchern in der zweiten Schicht umfasst und wobei das Loch/die Löcher der zweiten Schicht teilweise oder vollständig mit einem Material gefüllt ist/sind, das Pflanzenwuchs fördert.

2. Vorrichtung nach Anspruch 1, wobei mindestens ein Schaumstoffelement der Vielzahl von Schaumstoffelementen aus einem Polyethylen-Schaumstoffelement, einem Polypropylen-Schaumstoffelement, einem Biopolymer-Schaumstoffelement, einem EVA-Schaumstoffelement, einem Polyurethan-Schaumstoffelement, einem Polystyrol-Schaumstoffelement und Kombinationen davon ausgewählt ist.

3. Vorrichtung nach Anspruch 1 oder 2, wobei jedes Schaumstoffelement in der zweiten elastischen Schicht thermisch mit mindestens einem anderen Schaumstoffelement in der zweiten elastischen Schicht verbunden ist.

4. Vorrichtung nach einem der vorhergehenden Ansprüche, wobei die zweite Schicht eine Dicke von ungefähr 25 mm oder mehr, z. B. 35 mm, 45 mm, 55 mm, 65 mm, 75 mm, 85 mm, 90 mm oder 95 mm, aufweist.

5. Vorrichtung nach einem der vorhergehenden Ansprüche, wobei die zweite Schicht ferner eine Schicht eines Bodenbefestigungsmaterials umfasst, wobei die Schicht des Bodenbefestigungsmaterials bei Gebrauch an einer nach unten oder oben gewandten Fläche der zweiten Schicht positioniert ist.

6. Vorrichtung nach einem der vorhergehenden Ansprüche, wobei das Loch/die Löcher der zweiten Schicht einen Durchmesser von ungefähr 20mm oder mehr, z. B. 25mm, 30mm, 35mm, 40mm oder 45mm, aufweist/aufweisen.

7. Vorrichtung nach einem der vorhergehenden Ansprüche, wobei der mindestens eine Einsatzbereich ferner eine oder mehrere Nuten oder Kanäle an einer Fläche der zweiten Schicht umfasst.

8. Vorrichtung nach einem der vorhergehenden Ansprüche, wobei das Material aus Erde, Sand, Lehm und Kombinationen davon ausgewählt ist und wobei optional das Material ferner Grassamen umfasst.

9. Vorrichtung nach einem der vorhergehenden Ansprüche, wobei die erste Schicht ein Gummimaterial umfasst.

10. Vorrichtung nach einem der vorhergehenden Ansprüche, wobei mindestens ein Loch der ersten Schicht und mindestens ein Loch der zweiten Schicht im Wesentlichen allgemein miteinander ausgerichtet sind, um mindestens ein durchgehendes Loch zu bilden.

11. Vorrichtung nach einem der vorhergehenden Ansprüche, die eine dritte Schicht umfasst, welche eine zwischen der ersten Schicht und der zweiten Schicht angeordnete Zwischenschicht umfasst, wobei die Zwischenschicht eins oder mehrere von Erde, Grasnarbe, Lehm, Grassamen und/oder Sand umfasst und wobei optional die Vorrichtung eine vierte Schicht umfasst, die sich unterhalb der zweiten Schicht befindet, wobei die vierte Schicht Erde, Beton, Granulat, Sand oder Kombinationen davon umfasst.

12. Kit zum Bereitstellen einer aufprallabsorbierenden Fläche, umfassend eine erste Komponente, welche die zweite Schicht nach einem der Ansprüche 1 bis 11 umfasst, und eine zweite Komponente, welche die erste Schicht nach einem der Ansprüche 1 bis 11 umfasst, wobei die zweite Komponente bei Gebrauch benachbart zu und über der ersten Komponente angeordnet wird.

13. Kit nach Anspruch 12, ferner umfassend ein Befestigungselement zum Befestigen eines Rands einer zweiten Komponente an einem entsprechenden Rand einer weiteren zweiten Komponente, wodurch eine durchgehende horizontale Fläche bereitgestellt wird.

14. Verfahren zum Installieren einer aufprallabsorbierenden Fläche, umfassend:
a. Anordnen einer ersten Komponente, welche die zweite Schicht nach einem der Ansprüche 1 bis 11 umfasst;
b. Anordnen einer zweiten Komponente, welche die erste Schicht nach einem der Ansprüche 1 bis 11 umfasst, oben auf der ersten Komponente; und
c. Wiederholen der Schritte (a) und (b), bis eine aufprallabsorbierende Fläche einer gewünschten Größe installiert ist.

## Revendications

1. Appareil destiné à réduire l'impact d'une chute sur et/ou à augmenter l'amortissement d'une surface comprenant :
une première couche supérieure et une deuxième couche, dans lequel la première couche est élastique et comprend au moins un trou, et en outre dans lequel la deuxième couche est élastique et comprend :
une pluralité d'éléments de mousse, dans lequel au moins un élément de mousse est un élément de mousse à alvéoles fermées ; et
au moins une zone incrustée, dans lequel l'au moins une zone incrustée comprend une pluralité de trous débouchants dans la deuxième couche et dans lequel le(s) trou(s) de la deuxième couche sont partiellement ou entièrement rempli(s) avec un matériau qui supporte la croissance des plantes.

2. Appareil selon la revendication 1, dans lequel au moins un élément de mousse de la pluralité d'éléments de mousse est sélectionné parmi un élément de mousse polyéthylène, un élément de mousse polypropylène, un élément biopolymère, un élément de mousse EVA, un élément de mousse polyuréthane, un élément de mousse polystyrène et des combinaisons de ceux-ci.

3. Appareil selon la revendication 1 ou 2, dans lequel chaque élément de mousse dans la deuxième couche élastique est collé thermiquement à au moins un autre élément de mousse dans la deuxième couche élastique.

4. Appareil selon l'une quelconque des revendications précédentes, dans lequel la deuxième couche a une épaisseur d'environ 25 mm ou plus, par ex. : 35 mm, 45 mm, 55 mm, 65 mm, 75 mm, 85 mm, 90 mm ou 95 mm.

5. Appareil selon l'une quelconque des revendications précédentes, dans lequel la deuxième couche comprend en outre une couche de matériau stabilisateur de terrain, dans lequel ladite couche de matériau stabilisateur de terrain est positionnée sur une surface orientée vers le bas ou vers le haut de ladite deuxième couche en utilisation.

6. Appareil selon l'une quelconque des revendications précédentes, dans lequel le(s) trou(s) de la deuxième couche a(ont) un diamètre d'environ 20 mm ou plus, par ex. : 25 mm, 30 mm, 35 mm, 40 mm ou 45 mm.

7. Appareil selon l'une quelconque des revendications précédentes, dans lequel l'au moins une zone incrustée comprend en outre une ou plusieurs rainures ou canaux sur une surface de la deuxième couche.

8. Appareil selon l'une quelconque des revendications précédentes, dans lequel le matériau est sélectionné parmi du sol, du sable, de la terre argileuse et des combinaisons de ceux-ci, et en option dans lequel le matériau comprend en outre des graines de gazon.

9. Appareil selon l'une quelconque des revendications précédentes, dans lequel la première couche comprend un matériau caoutchouc.

10. Appareil selon l'une quelconque des revendications précédentes, dans lequel au moins un trou de la première couche et au moins un trou de la deuxième couche sont sensiblement globalement alignés pour former au moins un trou débouchant continu.

11. Appareil selon l'une quelconque des revendications précédentes, qui comprend une troisième couche qui est une couche intermédiaire située entre la première couche et la deuxième couche, dans lequel la couche intermédiaire comprend un ou plusieurs éléments parmi du sol, du gazon en plaque, de la terre argileuse, des graines de gazon et/ou du sable, et en option dans lequel l'appareil comprend une quatrième couche qui est située sous la deuxième couche, dans lequel la quatrième couche comprend du sol, du béton, de l'agrégat, du sable ou des combinaisons de ceux-ci.

12. Kit de fourniture d'une surface d'absorption d'impact comprenant un premier composant qui comprend la deuxième couche selon l'une quelconque des revendications 1 à 11 et un deuxième composant qui comprend la première couche selon l'une quelconque des revendications 1 à 11, dans lequel le deuxième composant est destiné à se positionner adjacent à et au-dessus du premier composant en utilisation.

13. Kit selon la revendication 12, qui comprend en outre un élément de fixation destiné à fixer un bord d'un deuxième composant à un bord correspondant d'un deuxième composant supplémentaire de façon à fournir une surface horizontale continue.

14. Procédé d'installation d'une surface d'absorption d'impact comprenant :
a. le positionnement d'un premier composant comprenant la deuxième couche selon l'une quelconque des revendications 1 à 11 ;
b. le positionnement d'un deuxième composant qui comprend la première couche selon l'une quelconque des revendications 1 à 11 au-dessus dudit premier composant ; et
c. la répétition des étapes (a) et (b) jusqu'à ce qu'une surface d'absorption d'impact d'une zone souhaitée soit installée.
